# EUROPEAN PATENT APPLICATION

(11) **EP 2 602 095 A1**
(43) Date of publication of application: **12.06.2013**
(21) Application number: 12195919.1
(22) Date of filing: 06.12.2012
(51) Int. Cl.: B29C 70/68, B29C 47/02, B32B 15/02, B32B 15/06, B32B 15/20, E04D 13/147, B32B 37/20

(54) **Insulating sheet and method for the manufacture of insulating articles**

(30) Priority: 06.12.2011 PL 39726011
(71) Applicant: Key & Key Holding B.V., 5615 JM Eindhoven (NL)
(72) Inventor: Kieruj, Mariusz, 87-207 Debowa Laka (PL); Szymanski, Piotr, 87-100 Torun 3 (PL)
(74) Representative: Hylarides, Paul Jacques

(57) **Abstract**

The present invention relates to a method for the manufacture of an insulating sheet comprising:
(a) extruding a sheet of thermoplastic elastomer;
(b) placing a metallic grid between two sheets of thermoplastic elastomers obtained in step (a) characterized in that the grid is placed on the entire surface of the thermoplastic elastomer sheet.
(c) thermally stabilizing the product obtained in step (b). Further, the present invention relates to an insulating sheet and to construction materials comprising said insulating sheet.

## Description

The present invention relates to a method for the manufacture of an insulating sheet. Further, the present invention relates to an insulating sheet and to construction materials comprising said insulating sheet.

Insulating materials provided with suitable insulation properties have practical, commercial and industrial interest. In particular, the insulation materials used in construction require not only insulation against temperature changes, but also an optimal impermeability to moisture, or water, as well as a suitable resistance to the natural elements, such as strong winds, or snow weight, for example.

EP 0123141 relates to a two-dimensional material comprising a metallic grid between two layers of an elastomer made by a lamination process.

The goal of the present invention is to manufacture an insulating sheet which provides a good insulation against temperature changes, which is impermeable to water and has the suitable strength as well as flexibility to resist external influences, such as deformations.

This goal is achieved by the method for the manufacture of an insulating sheet according to the present invention.

Specifically, this goal is achieved by the method for the manufacture of an insulating sheet comprising:
(a) extruding at least two sheets of thermoplastic elastomer;
(b) embedding a metallic grid between two sheets of thermoplastic elastomers obtained in step (a), and
(c) thermally stabilizing the product obtained in step (b).

The desired properties of the insulating sheet, or material, obtained by the method of the present invention originate from the steps recited in the method according to the present invention.

Additionally, the polymer used is not only an elastomeric polymer, also designated as an elastomer, but the polymer is specifically a thermoplastic elastomer. Accordingly, the thermoplastic elastomers according to the present invention have thermoplastic and elastomeric properties and present the advantage of a rubbery (elastomeric) materials and (thermo)plastic materials. In the context of the present invention, the thermoplastic elastomers are crosslinked.

In particular, the thermoplastic elastomers used in the method according to the present invention are copolymers or a physical mixture of polymers (such as a plastic and a rubber). In embodiment step (a) comprises extruding at least two sheets of thermoplastic copolymers. In an embodiment thermoplastic block copolymers, preferably multi-block copolymers are used and extruded. Block copolymers comprise two or more homopolymer subunits linked by covalent bonds. The union of the homopolymer subunits may require an intermediate non-repeating subunit, known as a junction block. Advantageously, the block copolymers used in the context of the present invention can advantageously comprise more than two distinct blocks, and can be designated as multiblock copolymers. Generally, block copolymers with two or three distinct blocks can also called diblock copolymers and triblock copolymers, respectively.

In the context of the present invention, the thermoplastic elastomers can be styrenic block copolymers, polyolefin blends, elastomeric alloys such as thermoplastic vulcanizate (TPE-v or TPV), thermoplastic polyurethanes, thermoplastic copolyesters, or thermoplastic polyamides.

In the context of the present invention, the insulating articles are made of thermoplastic elastomers. The advantages of the method for manufacturing the article is that the resulting product has the ability to be stretched to moderate elongations and, upon the removal of stress, return to something close to its original shape. Further, the article is easily processable and is malleable. Furthermore, it presents no significant creep (i.e. tendency of a solid material to move slowly or deform permanently under the influence of stresses).

In step (a), the two sheets of thermoplastic elastomers can be made of the same thermoplastic elastomers or they can be made of different thermoplastic elastomers. The two sheets can have the same thickness or different thicknesses.

In step (a) an extruder having a slit can be used to extrude the thermoplastic elastomer..

Advantageously, the two sheets used in step b) are obtained via two extrusion processes (a1) and (a2) wherein (a1) is the step in which a first sheet of thermoplastic material is extruded and (a2) is the step in which the second sheet of thermoplastic material is extruded. In step (b), a metallic grid is placed in between the two sheets obtained in (a1) and a2). Accordingly, steps (a) and (b) can be designated as:
(a1) extruding a first sheet of thermoplastic material;
(a2) extruding a second sheet of thermoplastic material;
(b) placing a metallic grid between the two sheets of thermoplastic elastomers obtained in step (a1) and (a2). The placing or sandwiching of the metallic grid between the extruded sheets results in embedding the metallic grid in the resulting sheet material.

In an embodiment only one of the two sheets of thermoplastic material is extruded in the method.

In subsequent steps of any of the embodiments the sheet material is compresses, e.g. using rolls. In an embodiment several rolling steps are subsequently performed for embedding the grid in the insulting sheet material. The rolling can be part of step (c).

In an embodiment the metallic grid is formed from a metallic sheet, preferably an aluminum sheet. In an embodiment the grid is formed in a cut a drawing method from a metallic sheet. Cuts are made in the metallic sheet and the sheet is drawn such that an open grid metallic sheet is obtained. This can be part of the method.

In embodiments the metallic grid can have a honeycomb grid or can be lozenge like.

In an embodiment the metallic grid is covered by the sheet of thermoplastic elastomer. In an embodiment the entire width of the grid is covered with elastomer.

Placing the metallic grid between the two sheets can comprise any combination of the following steps:
- placing the grid on a first layer
- pressing the grid into the first layer
- placing a second layer onto the grid side of the first layer
- pressing the second layer onto the first layer. The placing between two extruded sheets can comprise two subsequent steps.

In an embodiment the metallic grid is conveyed onto a first roll. The extruded sheet of thermoplastic material is fed onto the metallic sheet and covering the metallic sheet. The feeding of the extruded sheet can be upstream from the first roll or at the first roll. A second, smaller, roll can exert a pressure onto the thermoplastic sheet, resulting in the partial embedding of the grid in the extruded sheet material.

In a subsequent step the metallic grid and first extruded sheet is discharged from the first roll and fed to a further roll. The metallic grid and first extruded sheet is turned such that the metallic grid is facing away from the surface of the further roll.

In a further example a second sheet of thermoplastic material is extruded and fed onto the grid side of the grid + extruded material combination. The second sheet can be extruded and fed to the combination at or upstream from the second roll. Another, smaller, roll can be used to exert pressure onto the sheets sandwiching the grid in between resulting in the embedding of the grid in the insulating sheet material.

According to an aspect of the invention a building is provided having at least some insulation sheet according to any of the embodiments disclosed herein as part of its outside surface. Specifically insulation sheet is applied to cover angled surfaces on the roof, e.g. around windows or near sides of a roof.

Step (c) is a step in which the product obtained after step (b) is thermally stabilized. In subsequent steps post processing, including thermal stabilization is performed. The post processing can comprise further rolls, e.g. rolls arranged for calendaring. In an embodiment the thermal stabilization comprises calendaring. Calendaring is a process in which the product obtained in step (b), i.e. two sheets of thermoplastic elastomer in between which the metallic grid is placed, is passed under rollers at high temperatures and pressures.

In an embodiment the step of thermally stabilizing the product comprises embossing at least one side and in an embodiment both sides of the insulating sheet. The rolls used for calendaring can comprise engraved patterns. The patterns become stamped onto the sheet. Preferably a roughening of the surface of the insulating sheet product is obtained. The end result is a raised or sunken pattern, depending on the roller.

Further steps can be taken to embed the grid between the extruded thermoplastic sheets.

In any of the embodiment the method can comprise removing sides of the sheet material e.g. by cutting such that insulating material is obtained comprising the metallic grid over the entire width of the insulating material. This guarantees that the complete insulating material has the elastic properties of the combined metallic grid and thermoplastic extruded layers, e.g. resulting in an insulating material capable of replacing lead in roof cover applications.

In an embodiment the thermoplastic elastomer is a copolymer. The copolymer can be a block copolymer or a multiblock copolymer. Advantageously, said thermoplastic elastomer is vulcanized via standard vulcanization or dynamic vulcanization. In step a) or before step a) a peroxide curing agent can be used in the extruded material.

In an embodiment the method further comprises (d) vulcanizing the product obtained in step (c). Vulcanization is a chemical process for converting polymers into more durable materials via the addition of sulfur or other equivalent "curatives" or "accelerators". These additives modify the polymer by forming crosslinks (bridges) between individual polymer chains. Vulcanized materials have superior mechanical properties.

The vulcanization can be standard (also designated as conventional) or dynamic vulcanization. Conventional vulcanization allows to crosslink an article in its final shape, e.g. after the part has been put in its final shape, e.g., in a mold. For fast processing and increased working temperatures, dynamic vulcanization can be carried out. Dynamic vulcanization is suitable when a reduction of the flow is desirable, for example. The use of the premature vulcanization inhibitor, CTP, can give improved processing safety without loss of vulcanization throughput. In the case of thermoplastic elastomers prepared by dynamic vulcanization, all of the vulcanization is done rapidly during mixing, before the rubber compound flows into its final shape, e.g., during rapid thermoplastic extrusion. Advantages of dynamic vulcanization are for example: reduced permanent set and better elastic recovery; higher ultimate mechanical properties; improved fatigue resistance; greater resistance to attack by fluids; improved high temperature utility; greater stability of phase morphology in the melt and higher melt strength.

Accordingly, the desired properties of strength, flexibility, resistance to temperature changes and impermeability to water, moisture or humidity are advantageously obtained by manufacturing the insulating sheets according to the method of the present invention.

In an embodiment two or more strokes of grid are sandwiched between the two layers of extruded thermoplastic elastomers. The strokes of grid can be juxtaposed in the sheet. The grids can be spaced at a distance from each other allowing a space in between. The extruded elastomer layer is placed over the grids, covering the space. The adjacent strokes of grid are embedded in the insulation sheet.

The insulation sheet having the two or more strokes of interspaced grids will have one or more gridless strokes. These gridless strokes are less stiff and can be easily bent. The resulting insulating sheet material will have two or more zones having the grid, separated by gridless strokes. The gridless strokes can be 0.5 - 4mm, preferably 0.7 - 3, more preferably 0.9-2.5 mm wide. Tension in the product is released in such a product: bending the resulting product will result in local bending (bending of the local grid only), without exerting forces/pressure on the other zones separated from the bended zone. Such a release of tension in the end-product will allow easier fixation of the end product e.g. to building devices.

Advantageously, the insulating sheet manufactured according to the present invention presents a mass surface density of the metallic grid is in the range 300 to 1200 g/m², preferably 350 to 950 g/m², more preferably 400-750 g/m².

Advantageously, the insulating sheet comprising a mass surface density of the thermoplastic elastomer is in the range 1000 to 4500 g/m², preferably 1400 to 3800 g/m², more preferably 2000 to 3000 g/m².

In the context of the present invention, the thermoplastic elastomers can be a homopolymer (polymer made of one type of monomer) or a copolymer (polymer made of at least two types of monomers, such as two, three, four, five or six types of monomers).

In an embodiment the thermoplastic elastomer is a TVP, specifically EPDM rubber or a modified EPDM rubber.

According to an aspect of the present invention, the thermoplastic elastomer can be a multiblock copolymer of an elastomer and a thermoplastic polymer. Multiblock copolymers comprise two or more homopolymer subunits linked by covalent bonds. The union of the homopolymer subunits may require an intermediate non-repeating subunit, known as a junction block. Block copolymers with two or three distinct blocks are called diblock copolymers and triblock copolymers, respectively. Block copolymers can "microphase separate" to form periodic nanostructures.

An example is the styrene-butadiene-styrene block copolymer. Depending on the block length, the domains are generally more stable than the latter owing to the higher crystal melting point. That point determines the processing temperatures needed to shape the material, as well as the ultimate service use temperatures of the product.

According to an aspect of the present invention, the thermoplastic elastomer can be a copolymer of styrene-ethylene butylene-styrene.

Styrene-butadiene materials possess a two-phase microstructure due to incompatibility between the polystyrene and polybutadiene blocks, the former separating into spheres or rods depending on the exact composition. With low polystyrene content, the material is elastomeric with the properties of the polybutadiene predominating. Generally they offer a much wider range of properties than conventional cross-linked rubbers because the composition can vary to suit customer needs.

According to an aspect of the present invention, the thermoplastic elastomer can advantageously be a polymer selected from the group consisting of ethylene-propylene diene terpolymer, a copolymer of polyurethane, a polymer of styrene-ethylene butylene-styrene.

In the context of the present invention, one thermoplastic elastomer which can be used in the method of the present invention is ethylene propylene diene monomer (EPDM). Dienes used in the manufacture of EPDM rubbers can be dicyclopentadiene (DCPD), ethylidene norbornene (ENB), and vinyl norbornene (VNB). Another thermoplastic elastomer can be Ethylene propylene rubber can also be used in the method according to the present invention.

Polyurethane copolymers are composed of a chain of organic units joined by carbamate (urethane) links. Polyurethane polymers can be formed by combining two or several bi- or higher functional monomers. One contains two or more isocyanate functional groups (with formula -N=C=O) and the other contains two or more hydroxyl groups (with formula -OH). The alcohol and the isocyanate groups combine to form a urethane linkage: ROH + R'NCO → ROC(O)N(H)R' (R and R' are alkyl or aryl groups). More complicated monomers can also be used. In the context of the present invention, when the thermoplastic elastomers are copolymer of polyurethane, the insulating sheet manufactures are flexible and have a high-resilience.

According to an aspect of the present invention, the thermoplastic elastomer can advantageously be a copolymer of ethylene-propylene diene terpolymer and a thermoplastic polymer.

In the context of the present invention, the term "terpolymer" is to be understood as a copolymer made of three different types of monomer. The ethylene propylene dien terpolymer originates from EPDM wherein the monomer can be a diene as defined above for EPDM.

According to an aspect of the present invention, the thermoplastic elastomer can advantageously be a copolymer of ethylene-propylene diene terpolymer and a thermoplastic polymer chosen from the group consisting of polypropylene, polyethylene, polyethylene terephtalate.

According to an aspect of the present invention, the thermoplastic elastomer can advantageously be a copolymer of polyurethane with and a thermoplastic polymer chosen from the group consisting of polyethylene-vinyl acetate, polyethylene vinyl alcohol, fluoroplastics, polyoxymethylene (POM), polyacrylonitrile, polyaryletherketone, polybutadiene, polybutylene, polybutylene terephthalate, polychlorotrifluoroethylene, polypropylene, polystyrene, polytrimethylene terephthalate, polyvinyl acetate, polyvinyl chloride, polyvinylidene chloride, styrene-acrylonitrile.

In the context of the present invention, in EPDM, the ethylene content is around 45% to 75%. The higher the ethylene content the higher the loading possibilities of the polymer. The process of peroxide curing these polymers gives a higher crosslink density compared with their amorphous counterpart. The amorphous polymers are also excellent in processing. This is very much influenced by their molecular structure. The dienes, typically comprising from 2.5% up to 12% by weight of the composition, serve as crosslinks when curing with sulphur and resin, with peroxide cures the diene (or third monomer) functions as a coagent, which provide resistance to unwanted tackiness, creep or flow during end use.

In the context of the present invention, the insulating sheets manufactured according to the method of the present invention exhibit satisfactory compatibility with fireproof hydraulic fluids, ketones, hot and cold water, and alkalis.

The insulating sheets manufactured according to the method of the present invention, present outstanding heat, ozone and weather resistance. The resistance to polar substances and steam are also good. It has excellent electrical insulating properties.

In the context of the present invention, thermoplastic elastomers have the potential to be recyclable since they can be molded, extruded and reused like plastics, but they have typical elastic properties of rubbers which are not recyclable owing to their thermosetting characteristics. These materials also require little or no compounding, with no need to add reinforcing agents, stabilizers or cure systems. Hence, batch-to-batch variations in weighting and metering components are absent, leading to improved consistency in both raw materials and fabricated articles. Further, the thermoplastic elastomers can be easily colored by most types of dyes. In the method according to the present invention, the manufacture of the insulting article is performed using less energy and closer and therefore provides a more economical control of product quality is possible.

In the context of the present invention, examples of thermoplastic polymers that can be mixed or copolymerized with the elastomers according to the method of the present invention are acrylonitrile butadiene styrene (ABS), polyethylene-vinyl Acetate (EVA), polyethylene vinyl alcohol (EVOH), fluoroplastics (PTFE, alongside with FEP, PFA, CTFE, ECTFE, ETFE), polyoxymethylene (POM), polyacrylonitrile (PAN or Acrylonitrile), polyamide (PA or Nylon), polyaryletherketone (PAEK or Ketone), polybutadiene (PBD), polybutylene (PB), polybutylene terephthalate (PBT), polychlorotrifluoroethylene (PCTFE), polyethylene terephthalate (PET) polycyclohexylene dimethylene terephthalate (PCT), polyethylene (PE), polyetheretherketone (PEEK), polyetherketoneketone (PEKK), polyetherimide (PEI), polyethersulfone (PES), chlorinated polyethylene (CPE), polyimide (PI), polymethylpentene (PMP), polyphenylene oxide (PPO), polyphenylene sulfide (PPS), polyphthalamide (PPA), polypropylene (PP), polystyrene (PS), polysulfone (PSU), polytrimethylene terephthalate (PTT), polyvinyl acetate PVA), polyvinyl chloride (PVC), polyvinylidene chloride (PVDC), styrene-acrylonitrile (SAN).

According to an aspect of the present invention, the metallic grid is made of aluminum or an aluminum alloy.

Aluminum alloys are alloys in which aluminum (Al) is the predominant metal. The typical alloying elements are copper, magnesium, manganese, silicon and zinc. There are two principal classifications, namely casting alloys and wrought alloys, both of which are further subdivided into the categories heat-treatable and non-heat-treatable. About 85% of aluminum is used for wrought products, for example rolled plate, foils and extrusions. Cast aluminum alloys yield cost effective products due to the low melting point, although they generally have lower tensile strengths than wrought alloys. The most important cast aluminum alloy system is Al-Si, where the high levels of silicon (4.0% to 13%) contribute to give good casting characteristics. Aluminum alloys are widely used in engineering structures and components where light weight or corrosion resistance is required.

Alloys composed mostly of the two lightweight metals aluminum and magnesium can also be used in the method and the article according to the present invention. Aluminum-magnesium alloys are both lighter than other aluminum alloys.

Another aspect of the present invention relates to an insulating sheet comprising a metallic grid between two layers of thermoplastic elastomer material, wherein the metallic grid is made of aluminum or aluminum alloy. In the context of the present invention, all the definitions and preferences recited for the method for the manufacture of the insulating sheet apply to the present aspect of the present invention.

According to the present invention, the thermoplastic elastomer can be any of the above indicated elastomers. The thermoplastic elastomer can be a multiblockcopolymer of an elastomer and a thermoplastic polymer.

According to the present invention, the thermoplastic elastomer is advantageously a polymer selected from the group consisting of ethylene-propylene diene terpolymer, a copolymer of polyurethane, a polymer of styrene-ethylene butylene-styrene.

According to the present invention, the thermoplastic elastomer is advantageously a copolymer of ethylene-propylene diene terpolymer and a thermoplastic polymer.

According to the present invention, the thermoplastic elastomer is advantageously a copolymer of polyurethane with and a thermoplastic polymer chosen from the group consisting of polyethylene-vinyl acetate, polyethylene vinyl alcohol, fluoroplastics, polyoxymethylene (POM), polyacrylonitrile, polyaryletherketone, polybutadiene, polybutylene, polybutylene terephthalate, polychlorotrifluoroethylene, polypropylene, polystyrene, polytrimethylene terephthalate, polyvinyl acetate, polyvinyl chloride, polyvinylidene chloride, styrene-acrylonitrile.

According to an aspect of the present invention, the thermoplastic elastomer is advantageously a copolymer of styrene-ethylene butylenes-styrene.

According to an aspect of the present invention, the insulating sheet comprises a mass surface density of the metallic grid is in the range 300 to 1200 g/m², preferably 350 to 950 g/m², more preferably 400-750 g/m².

According to an aspect of the present invention, the insulating sheet comprising a mass surface density of the thermoplastic elastomer is in the range 1000 to 4500 g/m², preferably 1400 to 3800 g/m², more preferably 2000 to 3000 g/m².

In an embodiment the insulating sheet will have an embossing, resulting in better contact properties.

Another aspect of the present invention relates to construction material comprising the insulating sheet as defined hereabove, or as manufactured according to the present invention. The construction material can be a roof panel, or an insulation panel.

The insulating sheets and the construction materials comprising the insulating sheet according to the present invention, present the advantages of providing a good insulation against temperature changes, impermeability to water and strength as well as flexibility to resist external influences, such as deformations. Such deformation can be caused for example by strong winds, or snow weight.

The invention can relate and comprise any of combination of the features described above and below, combined explicitly or implicitly. The claims and/or divisional application(s) can be directed at any of the explicit or implicit features or combination of features described herein. Preferred embodiments will now be described with reference to the figures:
Figure 1: schematic view of a first embodiment of the method for manufacturing an insulation sheet according to the invention;
Figure 2: schematic view of an embodiment of the insulation sheet according to the invention;
Figure 3: a detailed view of the insulation sheet
Figure 4a: a schematic view of a second embodiment for manufacturing an insulation sheet according to the invention
Figure 4b: a schematic view of an insulation sheet according to a second embodiment of the invention.

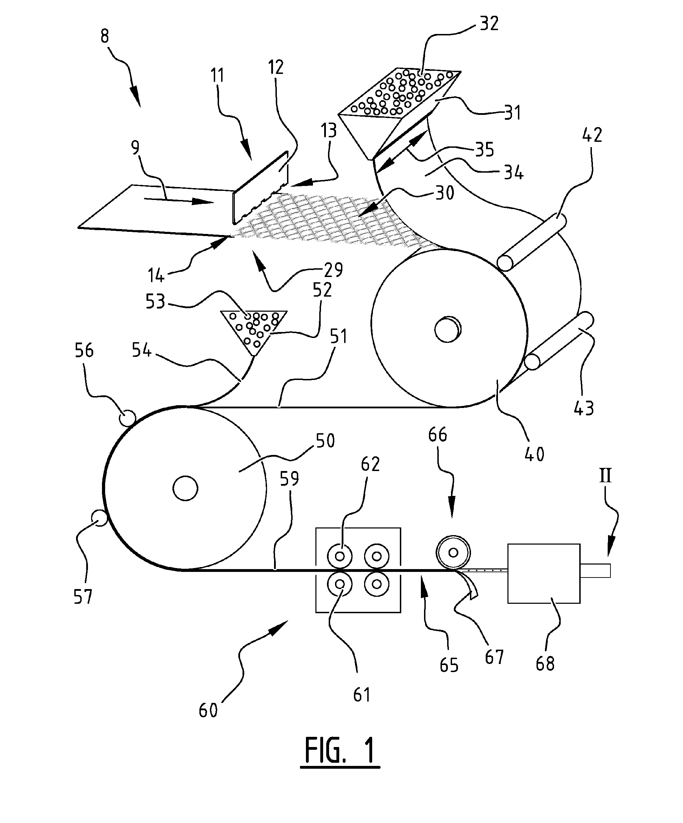

Figure 1 shows a schematic overview of a possible embodiment for manufacturing an insulation sheet according to the invention.

A metallic sheet 8 having a thickness of 0.2 mm - 4 mm, preferably 0.3 - 2 mm, more preferably 0.4 - 1 mm is provided. The metallic sheet can be supported by a suitable transporter or conveyor transported in direction 9. The metallic sheet can be aluminum or aluminum alloy, in an embodiment aluminum having plate quality 1050A-H24.

In a first step 11 the metallic sheet 8 is cut /punched using a suitable cutter, here schematically shown as a blade 12 having several teeth 13. The sheet will show a line of punches 14.

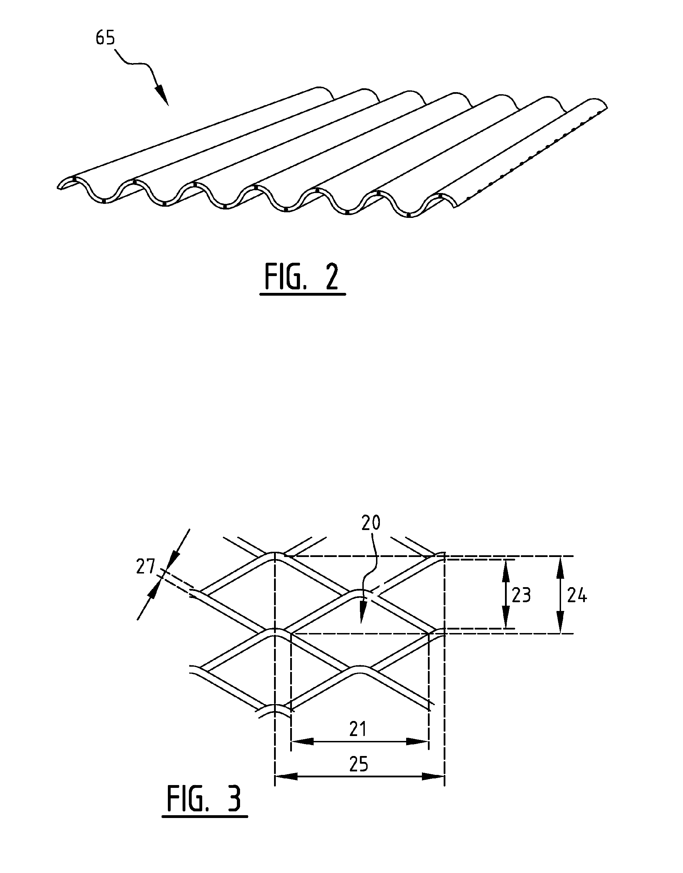

In a subsequent action, using a suitable tool (not shown), the punched metallic sheet is drawn in the transport direction 9, resulting in stretching of the sheet into a grid. A detail of the grid is shown in figure 3.

Figure 3 shows a metallic grid formed using the cut and draw method of an embodiment of the invention. The grid has a mesh structure comprising, in this embodiment, lozenge-like or honeycomb-like cells.

The internal length 21 of the cell 20 can be in the order of 2 - 10 mm, preferably 3 - 8 mm, more preferably 4 - 6.5 mm.

The internal width 23 of the mesh cell 20 can be in the order of 2-6 mm, preferably 2.5 - 5 mm, more preferably 3-3.8 mm.

In an embodiment the width 24 of the mesh can be in the order of 2-10mm, preferably 3-7 mm, more preferably 4 - 6 mm.

In an embodiment the length 25 of the mesh can be in the order of 4 - 14 mm, preferably 5 - 12 mm, more preferably 6 - 10 mm.

In an embodiment the width of the grid, the so-called bridge width 27, is in the order of 0.2-1.3mm, preferably 0.3 - 1.1 mm, more preferably 0.4-0.9 mm.

In an embodiment the weight per square meter of aluminum grid is in the order of 200 - 1200 grams, preferably 250 - 1000 grams, more preferably 300-800 grams.

Clearly many different grids are possible within the scope of the invention. A cut and drawn grid is preferred. A honeycomb or lozenge like grid is more preferred.

Returning to Figure 1, after the cut and draw step 29, the metallic grid 30 is obtained. It is fed to a roll 40. An extruder 31, shown only schematically, is provided with an extrusion material 32, such as a thermoplastic elastomer, preferably a copolymer as defined hereabove, more preferably a (multi)block copolymer, such as EPDM.

In an embodiment the material 32 is dynamically vulcanized. The extruder 31 can comprise suitable controls to initiate the vulcanization during extrusion.

The extruder 31 has a slit allowing extrusion of a first layer 34 of the extrusion material 32. The width 35 can be in the order of 0.3 - 4 m, preferably 0.5 - 3 m, more preferably 0.75 - 2.5 m.

The layer 34 is fed (shown only schematically) on top of the grid 30 on the roll 40. Suitable guides can be used.

In an embodiment several subsequent, smaller, rolls 42,43 are arranged to press onto the layer 34 positioned over the grid 30, resulting in the partial enclosing of the grid 30 into the layer 34. The pressing can be part of the method. Other processes, such as heating or cooling or other thermal treatments can be performed on the layer 34 + grid 30 combination, e.g. while on the roll 40.

In a further step the layer 34 + grid 30 combination is guided away from the roll 40 and fed to a further roll 50. As a result of the alignment, the grid side of the layer 34 + grid 30 combination 51 is now the facing outwardly.

A further extruder 52 having extrusion material 53 has a slit to provide a layer of extruded material 54 onto the grid side of the combination 51. This can be done before or after feeding the combination 51 to the roll 50. The materials and/or the properties of the extrusion material 53 and extrusion material 32 can be similar or different.

Subsequent pressing rolls 56,57 are arranged to exert pressure onto the combination 59 of a grid sandwiched between two layers of extruded thermoplastic elastomers. The pressure will result in preliminary bonding of the two layers with the grid.

The combination 59 is guided away from roll 50 into a schematic downstream or post processing unit 60. Here the combination 59 is thermally stabilized, step (c). The thermal stabilization can comprise calendaring using rolls 61,62. Any of the rolls 61,62 can comprise a pattern for embossing on either or both sides of the insulating sheet material 65.

In an embodiment the downstream processing unit 60 can comprise a vulcanization step to vulcanize the rubbers in the extruded material.

Further downstream in the shown embodiment, the sheet material 65 is fed into a schematically shown cutting apparatus 66 arranged to remove longitudinal side 67 of the insulating sheet 65 having no grid, or even a portion having grid is removed. This guarantees that the grid extends until the edge of the insulating sheet material 65.

In a further subsequent step in an embodiment the insulating sheet material is fed into a folding device 68 arranged to create small waves II into the insulating sheet, preferably wave in the longitudinal direction (with respect to the transport direction) of the insulation sheet 65.

The resulting insulating sheet is shown in figure 2.

The waves in the insulating sheet can have a radius of about 2.5 - 7 mm, preferably 3.2mm - 5.5mm, more preferably about 3.5 - 4.8 mm.

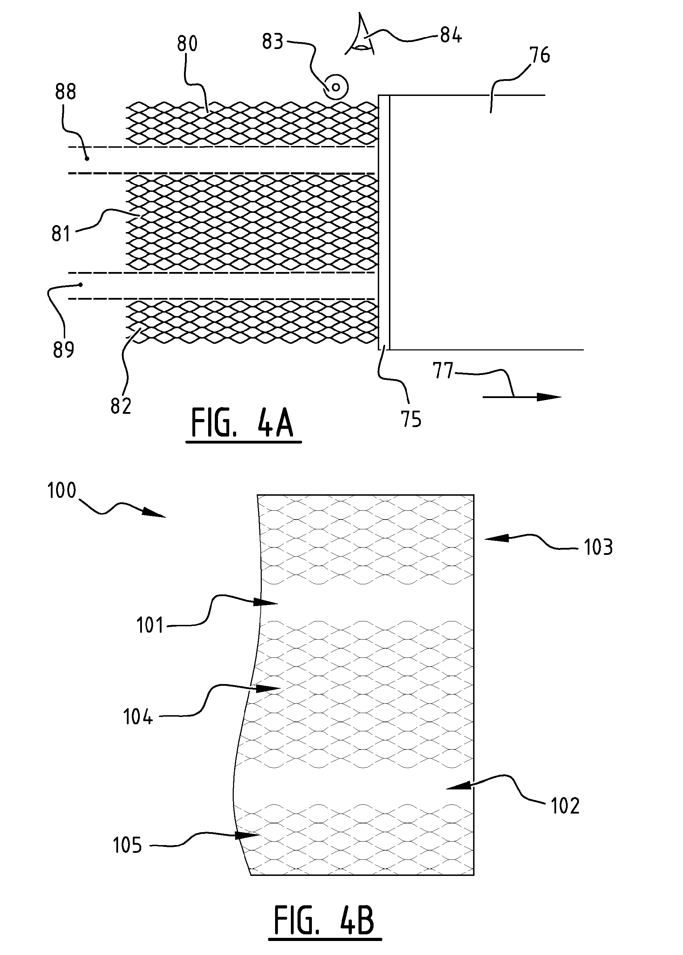

In a further embodiment, shown in figure 4a, a insulating sheet according to another embodiment can be manufactured. Figure 4a shows a detail, in top view, of the step of arranging the first extruded layer onto the grid, similar to the step at or upstream from roll 40 in the embodiment of figure 1.

The extruder comprises a slit 75. The extruded material 76 is positioned over metallic grid 80 and transported further downstream in direction 77.

The metallic grid 80 in this embodiment comprises three adjacent strokes 80,81,82 of grid material, such as an aluminum grid formed by a cut and draw method as described herein. The strokes 80,81,82 can have different widths.

The strokes are transported over suitable conveyors or other transport means. One of the conveyors 83 is shown schematically. The transport means are arranged to guide the strokes adjacently and can comprise a sensor 84. The sensor can send data to a control unit that is arranged to configure the conveyor to arrange the stroke at a predetermined distance adjacent one and other.

In the embodiment of figure 4a a gridless stroke 88 and 89 having a width of several mm's is provided in between the strokes. The gridless strokes can be provided at any of position. In an embodiment two gridless strokes can be position in one half of the width of the insulation material.

As a result of the sensor 84 and control unit, the grid strokes 80-82 can be positioned adjacently and the extruded layer is positioned on top of the strokes, similar to the method as shown in figure 1.

The resultant insulating sheet is shown in figure 4b. The resulting insulating sheet 100 comprises five zones: two gridless zones 101,102 in between three zones 103,104,105 having a grid sandwiched between two layers of extruded material.

As will be clear from the above description, many embodiments are possible within the scope of the invention.

## Claims

1. Method for the manufacture of an insulating sheet comprising:
(a) extruding at least two sheets of thermoplastic elastomer;
(b) placing a metallic grid between two sheets of thermoplastic elastomer obtained in step (a), and
(c) thermally stabilizing the product obtained in step (b)

2. Method according to claim 1, wherein the thermoplastic elastomer is a co-polymer.

3. Method according to claim 1 or 2, wherein the thermoplastic elastomers is a multiblockcopolymer of an elastomer and a thermoplastic polymer.

4. Method according to any one of claims 1 to 3, wherein the thermoplastic elastomer is a dynamically vulcanized elastomer and wherein step (a) comprises the dynamic vulcanizing of the elastomer respectively.

5. Method according to any one of claims 1 to 4, wherein the thermoplastic elastomer is a polymer selected from the group consisting of ethylene-propylene diene terpolymer, a copolymer of polyurethane, a polymer of styrene-ethylene butylene-styrene.

6. Method according to any one of the claims 1-4, wherein the thermoplastic elastomer is a copolymer of ethylene-propylene diene terpolymer and a thermoplastic polymer selected from the group consisting of polypropylene, polyethylene, polyethylene terephtalate.

7. Method according to any one of claims 1 to 4, wherein the thermoplastic elastomer is a copolymer of polyurethane with and a thermoplastic polymer chosen from the group consisting of polyethylene-vinyl acetate, polyethylene vinyl alcohol, fluoroplastics, polyoxymethylene, polyacrylonitrile, polyaryletherketone, polybutadiene, polybutylene, polybutylene terephthalate, polychlorotrifluoroethylene, polypropylene, polystyrene, polytrimethylene terephthalate, polyvinyl acetate, polyvinyl chloride, polyvinylidene chloride, styrene-acrylonitrile

8. Method according to any one of claims 1 to 4, wherein the thermoplastic elastomer is a copolymer of styrene-ethylene butylene-styrene.

9. Method according to any of previous claims, wherein the metallic grid is made of aluminum or an aluminum alloy, wherein the metallic grid is preferably formed by cutting and drawing a metallic sheet in order to form an open grid.

10. Method according to any of the previous claims, wherein the grid is placed on the entire surface of the thermoplastic elastomer sheet.

11. Method according to any of the previous claims, wherein the method further comprises
(d) vulcanizing the product obtained in step (c).

12. Insulating sheet comprising a metallic grid embedded between two layers of thermoplastic elastomer material,
wherein the metallic grid is made of aluminum or aluminum alloy.

13. Insulating sheet according to claim 12, wherein the insulating sheet comprises at least two strokes having a metallic grid embedded between the two layers separated by a gridless stroke.

14. Insulating sheet according to claim 12 or 13, comprising a mass surface density of the metallic grid is in the range 300-1200, more preferably 400 to 750 g/m²
and/or
comprising a mass surface density of the thermoplastic elastomer is in the range 1500 - 4000, more preferably 2000 to 3000 g/m²
and/or
comprising a embossing on at least one of the surfaces of the insulation sheet.

15. Insulating sheet according to any one of claims 12 to 13, wherein
the thermoplastic elastomer is a multiblockcopolymer of an elastomer and a thermoplastic polymer, and/or wherein
the thermoplastic elastomer is a polymer selected from the group consisting of ethylene-propylene diene terpolymer, a copolymer of polyurethane, a polymer of styrene-ethylene butylene-styrene, and/or wherein
the thermoplastic elastomer is a copolymer of ethylene-propylene diene terpolymer and a thermoplastic polymer, and/or wherein
the thermoplastic elastomer is a copolymer of polyurethane with and a thermoplastic polymer chosen from the group consisting of polyethylene-vinyl acetate, polyethylene vinyl alcohol, fluoroplastics, polyoxymethylene, polyacrylonitrile, polyaryletherketone, polybutadiene, polybutylene, polybutylene terephthalate, polychlorotrifluoroethylene, polypropylene, polystyrene, polytrimethylene terephthalate, polyvinyl acetate, polyvinyl chloride, polyvinylidene chloride, styrene-acrylonitrile, and/or wherein
the thermoplastic elastomer is a copolymer of styrene-ethylene butylene-styrene.

16. Insulating sheet according to any of the claims 13-15, wherein the thermoplastic elastomer, preferably a thermoplastic elastomer copolymer, more preferably a thermoplastic elastomer block copolymer, is a dynamically vulcanized thermoplastic elastomer, or wherein
the insulting sheet is vulcanized after embedding the metallic grid between the extruded sheets of thermoplastic elastomer.

17. Construction material comprising the insulating sheet according to any one of claim 12 to 16.
